# EUROPEAN PATENT SPECIFICATION

(11) **EP 0 540 603 B1**
(45) Date of publication and mention of the grant of the patent: **05.06.1996**
(21) Application number: 91913454.4
(22) Date of filing: 18.07.1991
(51) Int. Cl.: G01N 29/00

(54) **ANALYTICAL DEVICE**
ANALYTISCHE VORRICHTUNG
DISPOSITIF ANALYTIQUE

(30) Priority: 24.07.1990 GB 9016177
(43) Date of publication of application: 12.05.1993
(73) Proprietor: FISONS plc, Ipswich Suffolk IP1 1QH (GB); GEC-MARCONI LIMITED, Stanmore, Middlesex HA7 4LY (GB)
(72) Inventor: GIZELI, Electra, Cambridge CB3 9HH (GB); STEVENSON, Adrian, Carl, Cambridge CB4 1JJ (GB)
(74) Representative: Jones, Stephen Anthony
(86) International application number: GB9101203
(87) International publication number: WO9201931

(56) References cited:
- EP-A- 0 246 846
- EP-A- 0 361 729
- US-A- 4 312 228
- US-A- 4 735 906
- Analytical Chemistry, vol. 58, no. 14, 1 December 1986, D. BALANTINE et al.: "Correlation of surface acoustic wave device coating responses with solubility properties and chemical structure using pattern", pp. 3058-3066

## Description

This invention relates to chemical sensors, in particular to biosensors for detecting, for example, antibody-antigen binding reactions.

Antibodies are molecules which protect an organism from disease and/or infection. When an organism is exposed to an antigen, the organism creates antibodies which provide binding sites to which the antigen may be bound and immobilised.

Many known antibodies exist and can be used to detect specific antigens. Detection of such antigens is effected by providing the appropriate antibody and determining whether binding takes place. For example, an antibody may be provided on a surface of a support, the support may be immersed in a liquid thought to contain an antigen, and a physical characteristic of the surface and/or the support monitored to determine if binding (indicative of the presence of the antigen) has taken place. One form of support which has been used is a piezo-electric crystal in which surface acoustic waves (SAW) are generated. Binding of antigen to antibody on the surface of the support is detected as a decrease in wave velocity.

A problem which occurs with known SAW sensors is that considerable penetration occurs of the acoustic wave into the environment to be sensed. If the environment is gaseous this problem is not unduly onerous. However, if (as is usually the case for analysis of biologically originating samples) the environment is liquid then the penetration of the wave into the environment causes considerable damping. This in turn reduces the sensitivity of the device.

Devices have also been described which utilize shear horizontal waves. These offer a number of advantages over SAW devices:
1. Bulk waves suffer lower propagation losses than SAW (under liquids),
2. Bulk waves have higher velocities and can therefore be used at higher frequencies than SAW,
3. Bulk waves have superior temperature coefficients to SAW in both quartz and LiTaO₃.

However, these bulk wave devices suffer from the disadvantage of a limited mass sensitivity due to poor surface energy confinement.

We have now devised an improved form of chemical sensor of particular utility in the detection and/or determination of an analyte species in a sample which is liquid, as is generally the case for samples of biological origin, and which overcomes or substantially mitigates the disadvantages associated with known SAW and bulk wave devices.

According to the invention, there is provided a chemical sensor comprising;
a piezoelectric support capable of supporting a shear horizontal wave provided on its surface with an electrode,
characterized in that the surface of the piezoelectric support including the region bearing the electrode is covered by a layer of dielectric material of thickness 0.5 to 20 microns.

The sensor according to the invention is advantageous in that the layer of dielectric material increases the coupling coefficient and reduces the insertion loss of the wave. Also, and very importantly, the device may be totally immersed in a liquid with little attenuation occurring in the intensity of the guided surface wave.

Other advantages of the sensor according to the invention include its relatively simple construction and the fact that the whole surface of the device may be used for sensing, which increases the sensitivity. The dielectric layer may also reduce the temperature coefficient of delay. Further, by appropriate choice of dielectric material, eg derivatised silica, the need for an adhesion layer for the immobilisation of reagents on the surface can be eliminated.

The piezoelectric support may be formed of any suitable piezoelectric material. Generally, suitable materials will have

the following properties:
1. Large surface shear horizontal displacement,
2. Large electromechanical coupling constant,
3. Zero or small piezoelectric coupling to SAW and other bulk waves,
4. Zero or small beam steering both on the surface and into the bulk,
5. Zero or small temperature coefficient of delay.

Examples of suitable materials include lithium tantalate and quartz. The material is preferably a single crystal, particularly a single crystal cut in such a manner that waves polarized horizontally (ie in planes parallel to the surface of the support) are favoured. The thickness of the piezoelectric support is generally not critical but is typically of the order of 0.5mm for ease of handling. A reflecting lower surface could result in a plate-mode configuration which is not preferred. The support may alternatively comprise a slab of non-piezoelectric material with a thin layer of piezoelectric material coated on its surface.

The device according to the invention is conveniently a two-port waveguide sensor having spaced apart input and output electrodes.

Alternatively, the device may be a one-port resonator having a single electrode with a reflective metallic grating on either side. The gratings reflect the acoustic waves, a resonant cavity being formed between the gratings. Also, the gratings effect mass loading of the surface. For this latter purpose, a grating may be included in the two-port device, between the input and output electrodes.

The electrode(s) may take any conventional form but are preferably photolithographically deposited on the surface as elongate regions of metallisation transverse to the direction of propagation of a wave along the surface of the support. The elongate metallised regions preferably have a width and spacing of the same order of magnitude, the width being typically between 1 and 40µm, preferably between 10 and 20µm.

The regions of metallisation forming the electrodes may be formed by the deposition of chromium on the surface of the support and the vapour deposition of gold onto the chromium, and thereafter by etching to the desired pattern.

The thickness of the electrode(s) is typically between 0.1 and 5µm, preferably of the order of 0.2µm.

The surface of the piezoelectric support opposite to the surface carrying the electrode(s) is preferably coated or intimately contacted with a material having a good impedance match with the piezoelectric material and high acoustic absorption. This is to ensure that acoustic energy propagated through the piezoelectric material is not reflected back towards the active surface of the device. Suitable materials include plastics, wax and silicone rubber.

The dielectric layer may be formed of any suitable dielectric material. Suitable materials will have the property that the acoustic velocity in the dielectric is lower than that in the piezoelectric substrate. Examples of suitable materials include silicon dioxide and certain polymers, eg polymethylmethacrylate, polytetrafluoroethylene, polystyrene and polyethylene. Where polymers are used, they are preferably cross-linked to reduce infiltration of the layer by water molecules from the sample under test.

The optimum thickness of the dielectric layer will depend on numerous factors including the particular material used but in general satisfactory results are obtained with a layer of thickness 0.5 to 5µm, typically 1 to 3µm.

The dielectric layer is mechanically stiff to couple to the motion of the support and sufficiently dense to minimise waves lost to the support.

The dielectric layer is preferably derivatised or activated to facilitate immobilisation thereon of suitable binding reagents for the analyte(s) under test. Such reagents include, for biological samples, antibodies or antigens, and for other chemical applications such species as crown ethers (for the determination of particular ionic species).

In the operation of a two port device, an electrical signal, typically with a frequency of the order of 100 MHz, is applied to the input electrode which acts as a transducer, converting the electrical signal into an acousto-electric signal. Electrical matching circuitry is preferably provided to ensure efficient conversion of the radiofrequency signal into the acousto-electric signal which travels as a plane wave from the input electrode to the output electrode. Electrical matching is preferably carried out by means of a tuned core transformer or, more preferably, a low-loss balun.

The output electrode converts the acoustic signal back into a radiofrequency electric signal. Mass binding or viscous coupling to the vibrating surface as a result of a chemical or biochemical reaction slows down the surface wave and is detected as a change in signal phase (mass binding) or signal attenuation (viscous coupling). The phase change due to mass binding can be detected by frequency ratioing, a network analyser or similar phase detection system. The phase detector preferably includes a phase-locked loop system to maintain the phase of the signal constant, thereby improving the signal to noise ratio.

The surface dielectric layer ensures that the transmitted wave is slowed so that energy that would otherwise radiate down into the crystal bulk is retained at the surface of the piezoelectric crystal. This in turn increases the sensitivity of the device.

A preferred embodiment of a chemical sensor according to the invention will now be described, by way of illustration only, with reference to the accompanying drawings in which
Figure 1 is a plan view of the uncoated surface of a chemical sensor according to the invention,
Figure 2 is a cross-sectional view along the line II-II in Figure 1, and

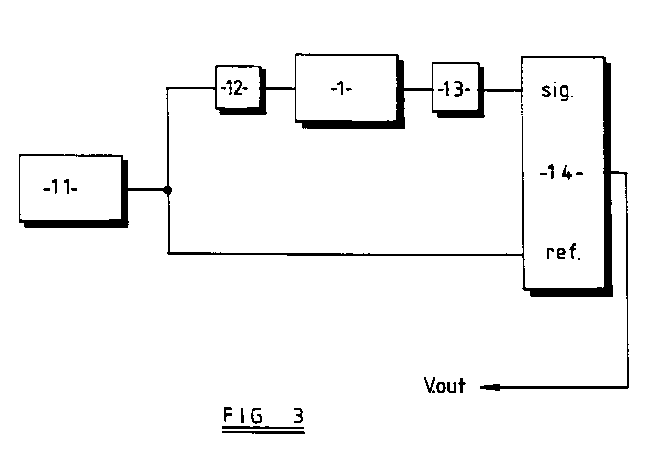

Figure 3 is a schematic representation of a sensing device incorporating the sensor of Figure 1.

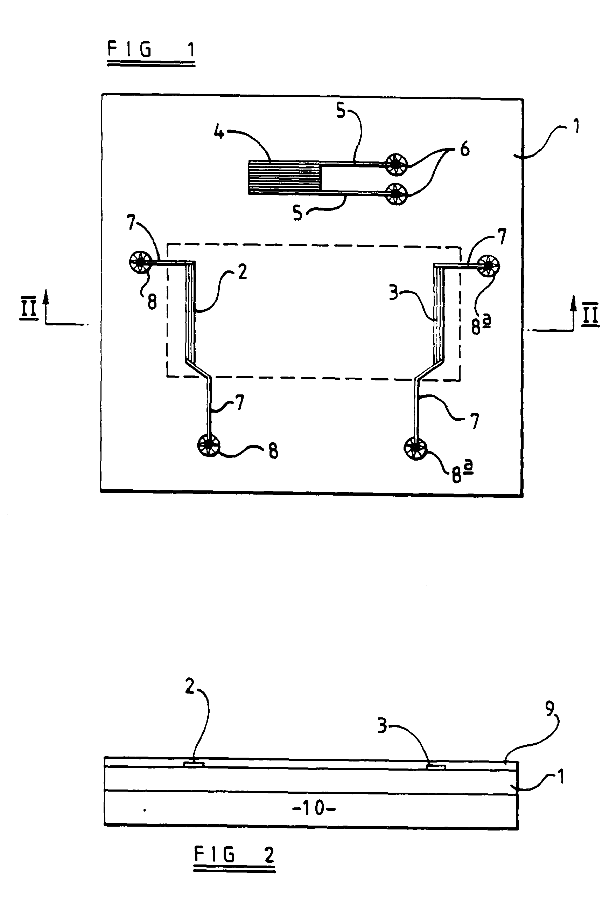

Referring first to Figure 1, a chip (1) of a single quartz crystal of approximate thickness 0.5mm forms a support for the sensor. The crystal is cut on the ST axis and the surface is polished and the underside preferably roughened. First and second electrodes (2,3) are deposited on the surface parallel to the X-axis of the crystal. The electrodes (2,3) are formed by photolithographic techniques, eg deposition and subsequent etching, and comprise parallel strips having a thickness of approximately 200nm, a width of approximately 11µm, and a spacing of approximately 20µm. The electrodes may be formed by the initial deposition of a layer of chromium. A layer of gold is then vapour deposited onto the surface of the chromium. The electrode pattern is then defined photolithographically using a resist and etched.

The cnip also includes a temperature sensing device (4) having leads (5) and contact pads (6). The dimensions of the chip are approximately 10mm x 10mm but is will be appreciated that a number of such devices are formed simultaneously on a wafer of quartz, the individual chips being cut from the wafer at a later stage of manufacture.

The electrodes (2,3) are brought out by connectors (7) to contact pads (8, 8a).

As can be seen from Figure 2, the chip (1) is provided on its surface bearing the electrodes (2,3) with a layer of silicon dioxide (9), and on the opposite surface with a coating of acoustically absorbing plastics tape (10). The layer of silicon dioxide (9) is approximately 3µm in thickness and covers the whole top surface of the chip (1) including the first and second electrodes (2,3).

Immobilised on the surface (within the area defined by the dashed line in Figure 1) of the layer of silicon dioxide (9) are appropriate binding reagents for the analyte under test. Such immobilisation can be carried out by techniques which are known to those skilled in the art.

In use, an AC signal of radiofrequency, say 100MHz, is applied from a synthesised oscillator (11) via electrical matching circuitry (12) to the contact pads (8) of the first electrode (2). This causes the production of motion in the crystal and the transmission of a guided acoustic wave along the surface of the crystal transverse to the X-axis and the electrodes (2,3). The operating frequency is determined by the velocity of the surface wave divided by twice the finger separation of the electrodes (2,3).

The guided acoustic wave is converted back into an electric signal by the second electrode (3) and is passed via further matching circuitry (13) to a phase detection system (14) which produces an output voltage (vₒᵤₜ) proportional to the difference in phase of reference and signal.

In use, the device is immersed in a liquid to be tested, or a drop of liquid is applied to the surface of the layer of silicon dioxide (9). If the liquid contains the species which binds with the reagent immobilised on the surface of the layer (9), a change in mass occurs at that surface. This slows the acoustic wave and alters the phase of the output signal. The change in phase provides a quantitative indication of the presence of the analyte in the sample.

## Claims

1. A chemical sensor comprising;
a piezoelectric support (1) capable of supporting a shear horizontal wave provided on its surface with an electrode (2,3),
characterized in that the surface of the piezoelectric support (1) including the region bearing the electrode (2,3) is covered by a layer of dielectric material (9) of thickness 0.5 to 20 microns.

2. A sensor as claimed in claim 1, wherein the piezoelectric support (1) is a single crystal.

3. A sensor as claimed in claim 2, wherein the piezoelectric support (1) comprises lithium tantalate or quartz.

4. A sensor as claimed in any one of the preceding claims, which is a two-port waveguide sensor having spaced apart input and output electrodes (2,3).

5. A sensor as claimed in any one of claims 1 to 3, which is a one-port resonator having a single electrode with a reflective metallic grating on either side.

6. A sensor as claimed in claim 4, wherein a metallic grating is provided between the input and output electrodes.

7. A sensor as claimed in any one of the preceding claims, wherein the electrode(s) (2,3) are photolithographically deposited on the surface as elongate regions of metallisation transverse to the direction of propagation of a wave along the surface of the support (1).

8. A sensor as claimed in claim 7, wherein the elongate metallised regions have a width and spacing of between 1 and 40µm.

9. A sensor as claimed in any one of the preceding claims, wherein the thickness of the electrode(s) (2,3) is between 0.1 and 5µm.

10. A sensor as claimed in any one of the preceding claims, wherein the surface of the piezoelectric support (1) opposite to the surface carrying the electrode(s) (2,3) is coated or intimately contacted with a material (10) having a good impedance match with the piezoelectric material and high acoustic absorption.

11. A sensor as claimed in any one of the preceding claims, wherein the dielectric layer (9) is of silicon dioxide.

12. A sensor as claimed in any one of claims 1 to 10, wherein the dielectric layer (9) is polymeric.

13. A sensor as claimed in any one of the preceding claims, wherein the thickness of the dielectric layer (9) is between 0.5 and 5µm.

14. A sensor as claimed in any one of the preceding claims, wherein the dielectric layer (9) is derivatised or activated to facilitate immobilisation thereon of suitable binding reagents for the analyte(s) under test.

## Patentansprüche

1. Chemischer Sensor, der aufweist:
einen piezoelektrischen Träger (1), der eine horizontale Scherwelle aufnehmen kann, die mit einer Elektrode (2, 3) an seiner Oberfläche erzeugt wird,
dadurch gekennzeichnet, daß die Oberfläche des piezoelektrischen Trägers (1) einschließlich des die Elektrode (2, 3) tragenden Bereiches durch eine Schicht aus dielektrischem Material (9) mit einer Dicke von 0, 5 bis 20 µm abgedeckt ist.

2. Sensor nach Anspruch 1, wobei der piezoelektrische Träger (1) ein Einkristall ist.

3. Sensor nach Anspruch 2, wobei der piezoelektrische Träger (1) Lithiumtantalat oder Quarz aufweist.

4. Sensor nach einem der vorhergehenden Ansprüche, der ein Zweistrahl-Wellenleitersensor mit beabstandeten Eingangs- und Ausgangselektroden (2, 3) ist.

5. Sensor nach einem der Ansprüche 1 bis 3, der ein Einstrahlresonator mit einer Einzelelektrode und einem Metallreflexionsgitter auf jeder Seite hat.

6. Sensor nach Anspruch 4, wobei zwischen den Eingangs-und Ausgangselektroden ein Metallgitter angebracht ist.

7. Sensor nach einem der vorhergehenden Ansprüche, wobei die Elektrode(n) (2, 3) in Form länglicher Metallisierungsbereiche quer zur Wellenausbreitungsrichtung entlang der Oberfläche des Trägers (1) fotolithografisch auf die Oberfläche aufgebracht wird (werden).

8. Sensor nach Anspruch 7, wobei die länglichen metallisierten Bereiche eine Breite und einen Abstand von 1 bis 40 µm haben.

9. Sensor nach einem der vorhergehenden Ansprüche, wobei die Dicke der Elektroden (2, 3) 0, 1 bis 5 µm beträgt.

10. Sensor nach einem der vorhergehenden Ansprüche, wobei die Oberfläche des piezoelektrischen Trägers (1), die der die Elektrode(n) (2, 3) tragenden Oberfläche gegenüberliegt, mit einem Material (10) beschichtet oder in engem Kontakt ist, das eine gute Impedanzanpassung an das piezoelektrische Material und eine hohe Schallabsorption aufweist.

11. Sensor nach einem der vorhergehenden Ansprüche, wobei die dielektrische Schicht (9) aus Siliciumdioxid besteht.

12. Sensor nach einem der Ansprüche 1 bis 10, wobei die dielektrische Schicht (9) ein Polymer ist.

13. Sensor nach einem der vorhergehenden Ansprüche, wobei die Dicke der dielektrischen Schicht (9) 0,5 bis 5 µm beträgt.

14. Sensor nach einem der vorhergehenden Ansprüche, wobei die dielektrische Schicht (9) derivatisiert oder aktiviert ist, um eine Immobilisierung geeigneter Bindungsreagenzien für den (die) zu untersuchenden Analyten auf der Schicht zu erleichtern.

## Revendications

1. Capteur chimique comprenant:
un support piézo-électrique (1) capable de porter une onde horizontale de cisaillement appliquée en sa surface au moyen d'une électrode (2, 3),
caractérisé en ce que la surface du support piézo-électrique (1) y compris la région portant l'électrode (2, 3) est recouverte dune couche de matériau diélectrique (9) d'une épaisseur de 0,5 à 20 microns.

2. Capteur selon la revendication 1, où le support piézo-électrique (1) est un cristal unique.

3. Capteur selon la revendication 2, où le support piézo-électrique (1) comprend du tantale de lithium ou du quartz.

4. Capteur selon l'une quelconque des revendications précédentes, qui est un capteur guide d'onde à deux portes ayant des électrodes d'entrée et de sortie espacées (2, 3).

5. Capteur selon lune quelconque des revendications 1 à 3, qui est un résonateur à une porte ayant une seule électrode avec une grille métallique réfléchissante sur chaque côté.

6. Capteur selon la revendication 4, où une grille métallique est intercalée entre les électrodes d'entrée et de sortie.

7. Capteur selon lune quelconque des revendications précédentes, où la ou les électrode(s) (2, 3) sont déposées par photolithographie sur la surface comme régions allongées de métallisation transversales à la direction de propagation dune onde le long de la surface du support (1).

8. Capteur selon la revendication 7, où les régions allongées métallisées présentent une largeur et un écartement d'entre 1 et 40 µm.

9. Capteur selon l'une quelconque des revendications précédentes, où lépaisseur de la ou des électrode(s) (2, 3) est située entre 0,1 et 5 µm.

10. Capteur selon l'une quelconque des revendications précédentes, où la surface du support piézo-électrique (1) opposée à la surface portant la ou les électrode(s) (2, 3) est revêtue ou maintenue en contact très étroit avec un matériau (10) présentant une bonne concordance d'impédance avec le matériau piézo-électrique et une forte absorption acoustique.

11. Capteur selon lune quelconque des revendications précédentes, où la couche diélectrique (9) est du dioxyde de silicium.

12. Capteur selon lune quelconque des revendications 1 à 10, où la couche diélectrique (9) est polymère.

13. Capteur selon l'une quelconque des revendications précédentes, où lépaisseur de la couche diélectrique (9) est située entre 0,5 et 5 µm.

14. Capteur selon lune quelconque des revendications précédentes, où la couche diélectrique (9) est dérivée ou excitée pour faciliter l'immobilisation sur celle-ci de réactifs de fixation appropriés pour le(s) analyte(s) testé(s).
